Europäisches Patentamt

European Patent Office

Office européen des brevets

(19)

(11) Veröffentlichungsnummer: **0 213 400 B1**

(12) **EUROPÄISCHE PATENTSCHRIFT**

(45) Veröffentlichungstag der Patentschrift:
03.10.90

(51) Int. Cl.⁵: **B25B 5/06, B23Q 3/08**

(21) Anmeldenummer: 86110519.5

(22) Anmeldetag: 30.07.86

(54) Spannvorrichtung für Werkstücke.

(30) Priorität: 06.09.85 DE 3531766

(43) Veröffentlichungstag der Anmeldung:
11.03.87 Patentblatt 87/11

(45) Bekanntmachung des Hinweises auf die Patenterteilung:
03.10.90 Patentblatt 90/40

(84) Benannte Vertragsstaaten:
AT BE CH DE FR GB IT LI LU NL SE

(56) Entgegenhaltungen:
DE-A- 1 478 857
DE-A- 3 034 827
DE-A- 3 318 432
DE-A- 3 318 434
DE-C- 726 846
GB-A- 1 333 149
GB-A- 1 333 150
GB-A- 2 082 945
GB-A- 2 138 338
US-A- 3 578 306
US-A- 3 724 837

(73) Patentinhaber: Gebrüder Honsberg GmbH, Hastener
Strasse 22-26, D-5630 Remscheid-Hasten(DE)

(72) Erfinder: Kölblin, Rolf, Kientalstrasse 44,
D-8036 Herrsching(DE)
Erfinder: Schneider, Reinhard, Kortemicker Strasse 16,
D-5275 Bergneustadt 2(DE)
Erfinder: Fligg, Hans Peter, Henkelshof 2-4,
D-5630 Remscheid 11(DE)

(74) Vertreter: Selting, Günther, Dipl.-Ing. et al,
Deichmannhaus am Hauptbahnhof, D-5000 Köln 1(DE)

**Beschreibung**

Zur Bearbeitung von Werkstücken mit Werkzeugmaschinen werden Spannvorrichtungen benötigt, um die Werkstücke in der für die Bearbeitung erforderlichen Weise zu fixieren. Vielfach werden noch manuelle Spannvorrichtungen benutzt, auf denen das Werkzeug festgespannt wird. Bekannt sind auch hydraulisch oder pneumatisch betriebene Spannvorrichtungen, die mehrere Spannfinger aufweisen, welche bei Betätigung am Werkstück angreifen. Die automatischen Spannvorrichtungen haben verschiedene Nachteile. Sie haben große bauliche Abmessungen und sind relativ kompliziert. Ein wesentlicher Nachteil besteht darin, daß sie im Spannzustand verriegelt werden müssen, um bei Ausbleiben des hydraulischen oder pneumatischen Drucks das Werkstück festzuhalten. Spannvorrichtungen, die von einer Bearbeitungsstation zu einer anderen bewegt werden, um das Werkstück zwischen zwei Bearbeitungsvorgängen zu transportieren, werden während der Transportbewegung von der Druckmittelquelle abgekoppelt. Um die Spannvorrichtungen während dieses Transports im gespannten Zustand zu halten, ist es auch bekannt, die Spannvorrichtung mit einem Druckgasspeicher zu versehen, der den Betriebsdruck während des abgekoppelten Zustands aufrechterhält und der an der nächsten Bearbeitungsstation wieder aufgeladen wird. In jedem Fall sind zusätzliche Mittel erforderlich, um den Spannzustand aufrechtzuerhalten, während der Betriebsdruck nicht zur Verfügung steht.

DE-A 1 478 857 beschreibt eine Spannvorrichtung für Werkstücke, bei der in einem langgestreckten Gehäuse ein verschiebbarer fluidbetätigter Kolben und ein stirnseitig aus dem Gehäuse herausragender Spannfinger angeordnet sind. Der Spannfinger ist in einem Kugelgelenk des Gehäuses gelagert und er weist im Inneren des Gehäuses ein Gleitelement auf, das in einer schrägen Gleitführung des Kolbens gleitet. In der Rückzugsstellung des Kolbens befindet sich auch der Spannfinger im eingezogenen Zustand, wobei sein äußeres Ende hochgestellt ist. Wird der Kolben im Gehäuse vorgeschoben, dann wird zunächst der Spannfinger aus dem Gehäuse herausgefahren. Wenn der Spannfinger gegen einen gehäusefesten Anschlag anstößt, dringt der Kolben weiter nach vorne vor, wodurch der Spannfinger nach unten geschwenkt wird, um das Werkstück auf einer Unterlage festzuspannen. Diese Spannvorrichtung hat eine große Baulänge, weil Kolben und Spannfinger entlang derselben Achse hintereinander angeordnet sind. Außerdem müssen Spannfinger und Kolben im Inneren des Gehäuses ebenfalls noch beträchtliche Längen haben, damit zur Durchführung der Schwenkbewegung der Spannfinger in das Innere des Kolbens eindringen kann.

Der Erfindung liegt die Aufgabe zugrunde, eine Spannvorrichtung der im Oberbegriff des Patentanspruchs 1 angegebenen Art zu schaffen, die raumsparend ausgebildet ist und eine kurze Baulänge hat.

Die Lösung dieser Aufgabe erfolgt erfindungsgemäß mit den im Patentanspruch 1 angegebenen Merkmalen.

Die erfindungsgemäße Spannvorrichtung hat eine extrem kurze Baulänge, weil das Gehäuse mit dem Kolben etwa mittig unterhalb des Spannfingers angeordnet werden kann. Die Führungsfläche kann im Mittelbereich des Kolbens vorgesehen werden.

Bei der erfindungsgemäßen Spannvorrichtung bewirkt der pneumatisch oder hydraulisch betätigte Kolben über die an ihm angebrachte Steuerfläche unmittelbar die Steuerung der beiden nacheinander durchzuführenden Bewegungen des Spannfingers. Die schräge Steuerfläche des Kolbens ist durch einen Anschlag begrenzt. Während des ersten Teils der Kolbenbewegung bewirkt der Kolben eine Bewegung des Spannfingers quer zur Kolbenrichtung, und zwar solange, bis der Anschlag des Kolbens den Spannfinger mitnimmt. Wenn dies geschieht, wird der Spannfinger in Achsrichtung des Kolbens bewegt. Zusätzlich zum Kolben und zum Spannfinger sind keine Steuerungselemente mit Kulissenführungen u.dgl. erforderlich. Die gesamte Bewegungssteuerung erfolgt ausschließlich über den Kolben und eventuell durch Anschlagflächen o.dgl. am Gehäuse.

Gemäß einer bevorzugten Weiterbildung der Erfindung ist der Winkel der Steuerfläche zur Kolbenrichtung so spitz, daß Selbsthemmung auftritt und der vom Druckmittel entlastete Kolben durch eine auf den Spannfinger einwirkende Kraft nicht bewegbar ist. Hierdurch wird erreicht, daß die schräge Steuerfläche, bei der es sich um eine geradlinige Keilfläche handelt, die Kolbenkraft rückwirkungsfrei auf den Spannfinger überträgt, daß aber bei einer auf den Spannfinger ausgeübten Kraft keine Verschiebung des Kolbens erfolgen kann. Wenn die Spannvorrichtung von der Druckmittelversorgung abgekoppelt ist, bleibt somit der Spannzustand aufrechterhalten, ohne daß hierzu eine spezielle Verriegelung vorgenommen werden müßte.

Wenn aus baulichen Gründen der Keilwinkel der Steuerfläche nicht klein genug gemacht werden kann, um Selbsthemmung zu erreichen, kann zusätzlich eine Feder vorgesehen werden, die am Gehäuse abgestützt ist und den Kolben in diejenige Endlage drückt, in der er den Spannfinger in axialer Stellung im Spannzustand festhält. Die Aufrechterhaltung des Spannzustandes bei Ausbleiben des hydraulischen oder pneumatischen Druckes wird dann unter Mitwirkung der Feder erzielt.

Im folgenden werden unter Bezugnahme auf die Zeichnungen Ausführungsbeispiele der Erfindung näher erläutert.

Es zeigen:

Fig. 1 einen mit mehreren Spannvorrichtungen ausgestatteten Werkstückhalter mit eingespanntem Werkstück,

Fig. 2 eine Darstellung des Werkstückhalters ohne Werkstück,

Fig. 3 einen Schnitt durch eine Spannvorrichtung entlang der Linie III–III aus Fig. 1,

Fig. 4 einen Schnitt entlang der Linie IV–IV von Fig. 3,

Fig. 5 einen Schnitt entlang der Linie V–V von Fig. 3, und

Fig. 6 in gleicher Darstellung wie Fig. 3 den Freigabezustand der Spannvorrichtung.

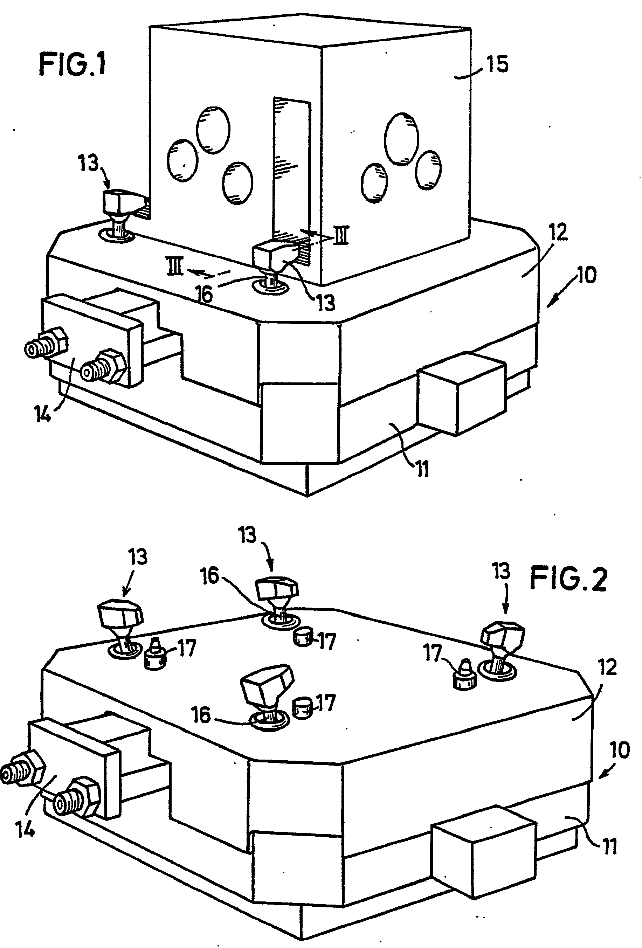

Der Werkstückträger 10 der Fign. 1 und 2 besteht aus einer Palette 11, die mit einer (nicht dargestellten) Fördervorrichtung entlang einer Förderstrecke von einer Werkzeugmaschine zu einer anderen Werkzeugmaschine bewegt werden kann. Auf der Palette 11 ist ein Gehäuse 12 montiert, das mehrere Spannvorrichtung 13 enthält, deren Spannköpfe aus dem Gehäuse herausragen. Das Gehäuse 12 weist ferner eine Anschlußkupplung 14 für zwei Hydraulikleitungen auf.

Fig. 1 zeigt den Zustand der Spannvorrichtungen 13 bei einem aufgespannten Werkstück 15. Das Werkstück 15 ruht auf vier Auflagepunkten (Gegenkolben 17) des Gehäuses 12 und die Köpfe der Spannvorrichtungen 13 übergreifen Stege oder Ränder des Werkstückes 15, um das Werkstück fest gegen die Auflagepunkte des Gehäuses gedrückt zu halten. In Fig. 2 sind die Köpfe der Spannvorrichtungen 13 im Freigabezustand dargestellt. Die Köpfe sind dann angehoben und um jeweils eine horizontale Achse herum seitlich nach außen geschwenkt. Zum Festspannen des Werkstücks 15 werden alle Köpfe zunächst in die vertikale Position geschwenkt und anschließend in das Gehäuse 12 hinein heruntergezogen. Diese Vorgänge werden nachfolgend noch erläutert werden. Jeder Kopf einer Spannvorrichtung ist an einem Spannfinger 16 befestigt, der aus dem Gehäuse 12 nach oben herausragt. Auf der Oberseite des Gehäuses 12 ist jedem Spannfinger 16 ein Gegenhalter 17 zugeordnet, auf den das Werkstück 15 aufgestellt wird. Der Kopf des Spannfingers 16 drückt im gespannten Zustand das Werkstück von oben gegen den Gegenhalter 17.

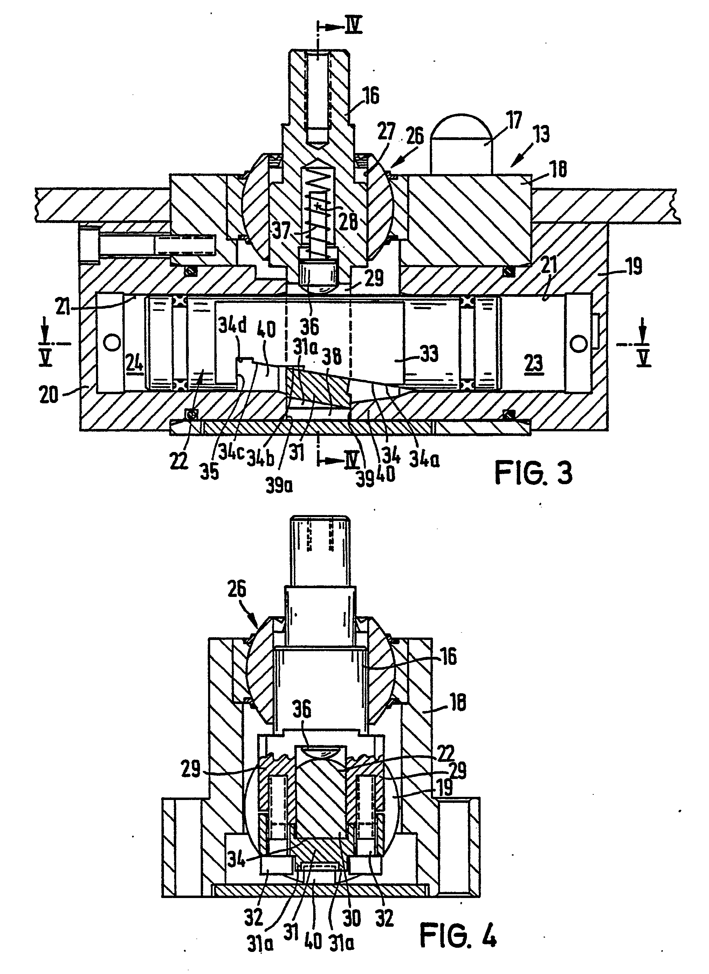

Fign. 3 bis 5 zeigen den Aufbau der Spannvorrichtung 13. Das Gehäuse 18, 19, 20 der Spannvorrichtung 13 weist ein äußeres Gehäuseteil 18 auf, das eine Bohrung enthält, in die von den entgegengesetzten Seiten her zwei rohrförmige Gehäuseteile 19 und 20 eingesetzt sind. Die inneren Enden der Gehäuseteile 19 und 20 sind mit gegenseitigem Abstand voneinander angeordnet. Die Gehäuseteile 19 und 20 weisen miteinander fluchtende Bohrungen 21 auf, die den Zylinderraum für den Kolben 22 bilden. Die äußeren Enden der Bohrungen 21 sind geschlossen. Der Kolben 22 erstreckt sich zwischen beiden Gehäuseteilen 19 und 20 und in jedem dieser Gehäuseteile befindet sich ein Zylinderraum 23 bzw. 24, der über Anschlußbohrungen 25 mit einer Hydraulikleitung verbindbar ist, so daß der Kolben abwechselnd in die eine oder andere Richtung bewegt werden kann.

An der Oberseite des äußeren Gehäuseteils 18 ist der Gegenhalter 17 befestigt. Außerdem befindet sich in der oberen Wand des Gehäuseteils 18 eine Öffnung, in der ein Kugelgelenk 26 befestigt ist. Durch eine Bohrung 27 der Gelenkkugel des Kugelgelenks 26 führt der Spannfinger 16 hindurch. Der Spannfinger kann somit um die Gelenkachse 28 des Kugelgelenks 26 herum geschwenkt und außerdem axial zu der Bohrung 27 verschoben werden. Der Spannfinger 16 weist zwei mit gegenseitigem Abstand angeordnete Schenkel 29 auf, die den Steg 30 der den mittleren Abschnitt des Kolbens 22 bildet, gabelförmig umgreifen. An den unteren Enden der Schenkel 29 ist das Führungselement 31 mit Schrauben 32 befestigt. Das Führungselement 31 verläuft quer unter dem Steg 33 des Kolbens. Die Unterseite des Steges 33 bildet die Steuerfläche 34. Diese Steuerfläche 34 besteht aus den folgenden Abschnitten: einem geradlinigen schrägen Abschnitt 34a, der unter einem Winkel von etwa 10° zur Längsrichtung des Kolbens verläuft und sich von der Wand des Zylinderraums 23 aus erstreckt, einem sich an den Abschnitt 34a anschließenden Abschnitt 34b, dessen Begrenzung parallel zur Längsrichtung des Kolbens 22 verläuft, einem weiteren schrägen Abschnitt 34c und einem weiteren parallelen Abschnitt 34d. Die Abschnitte 34a und 34c verlaufen in einer gemeinsamen Ebene. Das Ende des Abschnitts 34d wird von dem Anschlag 35 des Kolbens 22 gebildet.

Die Oberseite des Gleitelements 31 hat die gleiche Schrägstellung wie die Bereiche 34a und 34c, an denen diese Oberseite entlanggleitet. Die Unterseite des Gleitelements 31 verläuft parallel zur Oberseite und sie wird seitlich durch zwei Stege 31a begrenzt.

In einer Sackbohrung des Spannfingers 16 ist ein Druckstück 36 quer zur Längsrichtung des Kolbens 24 verschiebbar angebracht. Das Druckstück 36 wird von einer Feder 37 gegen die Oberseite des Steges 33 gedrückt. Durch die Wirkung der Feder 37 wird der Spannfinger 16 in Bezug auf den Kolben 22 hochgedrückt, so daß das Gleitstück 31 in fester Anlage an der Steuerfläche 34 gehalten wird.

Wenn bei einem Spannvorgang die Oberseite des Gleitelements 31 mit dem schrägen Abschnitt 34a zusammenwirkt, wird das Gleitelement in den Zwischenraum 38 zwischen den beiden Gehäuseteilen 19 und 20 hineingedrückt. Das eine (linke) Ende des Gleitelements 31 stößt dabei gegen den Anschlag 39a, der von dem Ende des Gehäuseteiles 20 gebildet wird.

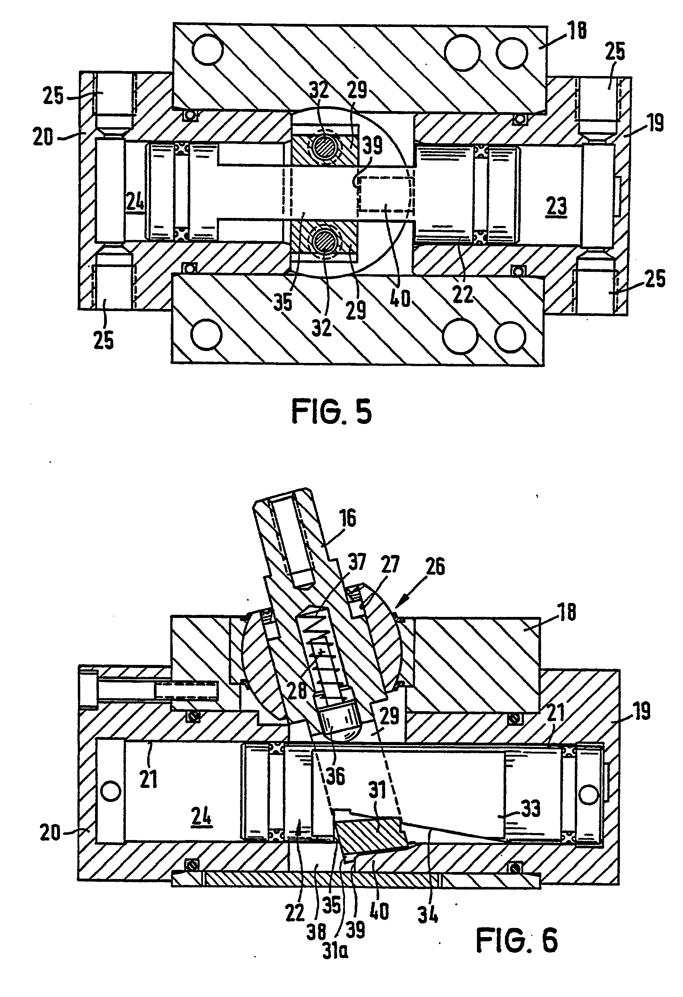

In Fig. 3 ist der Spannzustand des Spannfingers 16 dargestellt. Der Spannfinger 16 befindet sich in senkrechter Position und er ist in das Gehäuse hineingezogen, so daß der an seinem Ende befestigte Kopf das Werkstück gegen den Gegenhalter 17 ziehen kann. In diesem Zustand liegt das Gleitelement 31 an dem Bereich 34a der Steuerfläche an, so daß das Gleitelement in den Raum 38 gedrückt wird und der Spannfinger 16 heruntergezogen wird. Wird in diesem Zustand der Zylinderraum 24 mit Druck beaufschlagt und der Zylinderraum 23 entlastet, dann bewegt sich der Kolben 22 gemäß Fig. 3 nach rechts. Da das rechte Ende des Gleitelements 31 am Anschlag 39 liegt, bleibt die Ausrichtung des Spannfingers 16 unverändert, bis der Anschlag 35 des Kolbens gegen die linke Seite des Gleitelementes 31 stößt. Wenn dies geschieht, befindet sich das Gleitelement im Bereich der Abschnitte 34b, 34c und 34d, die so weit zurückliegen, daß das Gleitelement von der Ausnehmung 40 des Kolbens 22 im wesentlichen aufgenommen wird, so daß sein rechtes Ende nicht mehr gegen den Anschlag 39 stößt. Zusammen mit dem Gleitelement 31 ist auch der Spannfinger 16 hochgedrückt worden. Nachdem der Spannfinger 16 seine höchste Position erreicht hat, wird das Gleitelement 31 von dem Anschlag 35 mitgenommen, bis die in Fig. 6 dargestellte Freigabeposition erreicht ist. Dabei wird der Finger 16 um den Mittelpunkt 28 des Kugelgelenks 26 herum verschwenkt, während die Unterseite des Gleitstücks 31 über den Steg 40 hinweggleitet. Die Oberseite des Steges 40 ist abgeschrägt, so daß das Gleitstück 31 die in Fig. 6 dargestellte Position einnehmen kann, in der seine linke obere Kante gegen den Anschlag 35 stößt, während die rechte obere Kante gegen die Stufe des Bereichs 34b der Steuerfläche 34 drückt und die rechte untere Kante auf der Oberseite des Steges 40 ruht. In diesem Zustand ist der Gleitfinger 16 nicht nur angehoben, sondern auch von dem Gegenhalter 17 fortgeschwenkt. Die Spannvorrichtung ist nunmehr zum Aufsetzen eines neuen Werkstücks frei. Wird anschließend der Zylinderraum 23 mit Druck beaufschlagt, dann bewegt sich der Kolben 22 aus der in Fig. 6 dargestellten Stellung nach links, wobei die Schulter des Bereichs 34b das Gleitstück 31 mitnimmt, so daß der Spannfinger 16 zunächst in die senkrechte Position gebracht wird. Wenn das rechte Ende des Gleitfingers 31 den Anschlag 39 überschritten hat, befindet sich der Spannfinger in der senkrechten Position und durch die Weiterbewegung des Kolbens 22 nach links wird der Spannfinger heruntergezogen, indem der Bereich 34a der Steuerfläche 34 gegen das Gleitelement 31 drückt.

Der Winkel der Bereiche 34a und 34c der Steuerfläche 34 in Bezug auf die Richtung des Kolbens 22 ist so klein, daß Selbsthemmung auftritt. Dies bedeutet, daß eine den Spannfinger 16 nach oben ziehende Zugspannung nicht imstande ist, den Kolben 22 über das Gleitstück 21 zu verschieben. Gegen äußere Schwenkkräfte ist der Spannfinger 16 dadurch gesichert, daß das rechte Ende des Gleitstücks 31 gegen den Anschlag 39 stößt.

## Patentansprüche

1. Spannvorrichtung für Werkstücke mit einem schwenkbar und längsverschiebbar gelagerten Spannfinger (16) und einem druckmittelbetriebenen Kolben (22), der den Spannfinger in Abhängigkeit vom Kolbenweg derart steuert, daß die Schwenkbewegung und die Verschiebebewegung nacheinander durchgeführt werden, wobei der Kolben (22) eine schräge Steuerfläche (34) aufweist, auf der ein Gleitelement (31) des Spannfingers (16) gleitet und den Spannfinger quer zur Kolbenrichtung verschwenkt, und am Kolben (22) ein Anschlag (35) vorgesehen ist, der den Spannfinger (16) am Ende der Gleitbewegung in Kolbenrichtung mitnimmt, dadurch gekennzeichnet, daß der Kolben (22) quer zur Verschiebebewegung des Spannfingers (16) angeordnet ist, daß das Gleitelement (31) an einem Anschlag (39) des Gehäuses angreift und den Spannfinger (16) in axialer Ausrichtung hält, solange der Spannfinger nicht seine äußerste Stellung in Verschiebebewegung erreicht hat, und daß das Gleitelement (31) nur in der äußersten Stellung des Spannfingers (16) den gehäusefesten Anschlag (39) zur Ermöglichung der Schwenkbewegung des Spannfingers (16) verläßt.

2. Spannvorrichtung nach Anspruch 1, dadurch gekennzeichnet, daß der Winkel der Steuerfläche (34) zur Kolbenrichtung so spitz ist, daß Selbsthemmung auftritt und der vom Druckmittel entlastete Kolben durch eine auf den Spannfinger einwirkende Kraft nicht bewegbar ist.

3. Spannvorrichtung nach einem der Ansprüche 1 bis 2, dadurch gekennzeichnet, daß eine an dem Gehäuse abgestützte Feder den Kolben in diejenige Endlage drückt, in der er den Spannfinger (16) in axialer Stellung im Spannzustand festhält.

## Claims

1. Chucking fixture for workpieces comprising a clamping finger (16) supported for swiveling and for moving longitudinally and a pressure medium-operated piston (22) controlling the clamping finger responsive to the piston travel so that the swivel and displacement movements are performed successively, the piston (22) having an oblique control surface (34; 56) on which slides a sliding element (31) of the clamping finger (16) to swivel the clamping finger transversely to the piston direction and that a stop (35) is provided at the piston (22), which, at the end of the sliding movement, entrains the clamping finger (16) in direction of the piston, characterized in that the piston (22) is arranged transversely to the clamping finger (16), that the sliding element (31) engages a stop (39) of the housing to keep the clamping finger (16) in axial alignment as long as the clamping finger has not reached its outermost position in the direction of displacement, and that the sliding element (31) leaves the stop attached to the casing (39) only in the outermost position of the clamping finger (16) to allow the swivel movement of the clamping finger (16).

2. Chucking fixture according to claim 1, characterized in that the angle of the control surface (34) relative to the piston direction is acute enough to cause self-locking and that the piston relieved from the pressure medium is not movable by a force acting on the clamping finger.

3. Chucking fixture according to one of claims 1 to 2, characterized in that a spring supported on the housing urges the piston into the final position in which it keeps the clamping finger (16) axially positioned in clamping condition.

## Revendications

1. Dispositif de serrage pour des pièces à usiner comportant un doigt de serrage (16) logé à pivotement et à coulissement longitudinal et un piston (22) actionnable par un fluide de pression, qui commande le doigt de serrage en fonction du trajet de piston de telle manière que le déplacement de pivotement et le déplacement de coulissement soient exécutés l'un après l'autre, le piston (22) présentant une surface de commande oblique (34), sur laquelle un élément glissant du doigt de serrage (16) glisse et fait pivoter le doigt de serrage transversalement à la direction du piston, et une butée (35), qui entraîne dans la direction du piston le doigt de serrage (16) à la fin du déplacement de glissement, étant prévue sur le piston (22), caractérisé par le fait que le piston (22) est disposé transversalement au mouvement de coulissement du doigt de serrage (16), que l'élément de glissement (31) agit sur une butée (39) du boîtier et maintient le doigt de serrage (16) en orientation axiale tant que le doigt de serrage n'a pas atteint sa position la plus extérieure lors de son mouvement de coulissement et que l'élément de glissement (31) ne quitte la butée (39) fixe sur le boîtier, pour permettre le mouvement de pivotement du doigt de serrage (16), que dans la position la plus extérieure du doigt de serrage (16).

2. Dispositif de serrage selon la revendication 1, caractérisé par le fait que l'angle entre la surface de commande (34) et la direction du piston est suffisamment aigu pour qu'il se produise un blocage autonome et que le piston, quand le fluide sous pression ne le sollicite plus, ne soit pas mobile sous l'effet d'une force agissant sur le doigt de serrage.

3. Dispositif de serrage selon l'une des revendications 1 ou 2, caractérisé en ce qu'un ressort appuyé sur le boîtier pousse le piston dans la position finale dans laquelle il maintient le doigt de serrage (16) en position axiale dans l'état de serrage.

FIG.1

FIG.2

**FIG. 3**

**FIG. 4**

EP 0 213 400 B1

FIG. 5

FIG. 6